# EUROPÄISCHE PATENTSCHRIFT

(11) **EP 0 849 115 B1**
(45) Veröffentlichungstag und Bekanntmachung des Hinweises auf die Patenterteilung: **30.10.2002**
(21) Anmeldenummer: 97810945.2
(22) Anmeldetag: 04.12.1997
(51) Int. Cl.: B60P 1/48

(54) **Für ein Transportfahrzeug bestimmte Be- und Entladevorrichtung**
Loading and unloading device for transport vehicle
Chargeur et déchargeur pour véhicule de transport

(30) Priorität: 21.12.1996 CH 315896
(43) Veröffentlichungstag der Anmeldung: 24.06.1998
(73) Patentinhaber: Stamatech AG, 6403 Küssnacht a. R. (CH)
(72) Erfinder: Stauffer, Jörg, 4104 Oberwill (CH)
(74) Vertreter: Eder, Carl E.

(56) Entgegenhaltungen:
- FR-A- 1 089 304
- GB-A- 577 711
- GB-A- 2 115 373
- PATENT ABSTRACTS OF JAPAN vol. 8, no. 76 (M-288) [1513] , 9.April 1984 & JP 58 221730 A (SHINMEIWA), 23.Dezember 1983,
- MEILLER, Absetzkipper AK 11 LT, Drucksach-Nr. 9806-736-1295

## Beschreibung

Die Erfindung bezieht sich auf eine für den Einbau auf die Ladebrücke eines Kleintransportfahrzeuges bestimmte Be- und Entladevorrichtung gemäss den Merkmalen des Oberbegriffes des Anspruchs 1. Es sind derartige Absetzkipper bekannt, bei welchen die Be-und Entladevorrichtung teleskopisch ausgeführt ist und insbesondere zwei in Längsrichtung verschiebbare Tragstangen umfasst, von denen je eine einem Schwenkarm zugeordnet ist. Solche Absetzkipper sind vor allem zum Transportieren von Grossmulden vorgesehen. Ein Beispiel dafür ist beschrieben in der Druckschrift "MEILLER, Absetzkipper AK 11 LT, Drucksach-Nr, 9806-736-1295" aus dem Jahr 1995. Analoge Be- und Entladevorrichtungen für Kleintransportfahrzeuge, mit welchen in Kisten verpackte oder auf Paletten aufgestapelte Güter transportiert werden, sind nicht bekannt.

Zu den Kleintransportfahrzeugen gehören für den Stadt- und Nah-verkehr bestimmte Kleinlieferwagen, Kurierfahrzeuge und Servicewagen. Sie alle besitzen Hecktüren, welche an sich ein einfaches Be- und Entladen der Ladebrücke mit Kisten und Paletten ermöglichen.

Zum Be- und Entladen von diesen Fahrzeugen kommen heute vorzugsweise Gabelstapler zum Einsatz. Steht beim Beladen des Fahrzeuges kein solcher zur Verfügung, müssen die zum Beispiel auf einer Palette aufgeschichteten Waren und Güter vom Chauffeur einzeln auf eine auf der Ladebrücke bereitgestellte, zweite Palette umgeladen werden. Am neuen Ort sind die Waren dann - wenn wiederum kein Gabelstapler zur Verfügung steht-erneut einzeln zu entladen. Diese Art des Handlings verhindert einen zweckmässigen und rationellen Einsatz des Bedienungspersonals, insbesondere des Chauffeurs. Dazu kommt, dass das Heben von verhältnismässig schweren Gütern der Gesundheit des Bedienungspersonals schaden kann.

Der Behebung dieses Nachteils beim Be- und Entladen von Kleinfahrzeugen mit Kisten, Paletten und dergleichen dient nun die vorliegende Erfindung. Diese hat hierbei eine Be- und Entladevorrichtung zum Gegenstand, die durch die im Patentanspruch 1 angegebenen Merkmale gekennzeichnet ist.

Nachfolgend wird anhand der Zeichnung ein Ausführungsbeispiel der Erfindung beschrieben. In der Zeichnung zeigt
die Figur 1 eine schematische Seitenansicht einer Be- und Entladevorrichtung in herausgeschwenktem Zustand,
die Figur 2 die Be- und Entladevorrichtung der Figur 1 in eingeschwenktem Zustand, und
die Figur 3 eine Ansicht in Pfeilrichtung III der Figur 2.

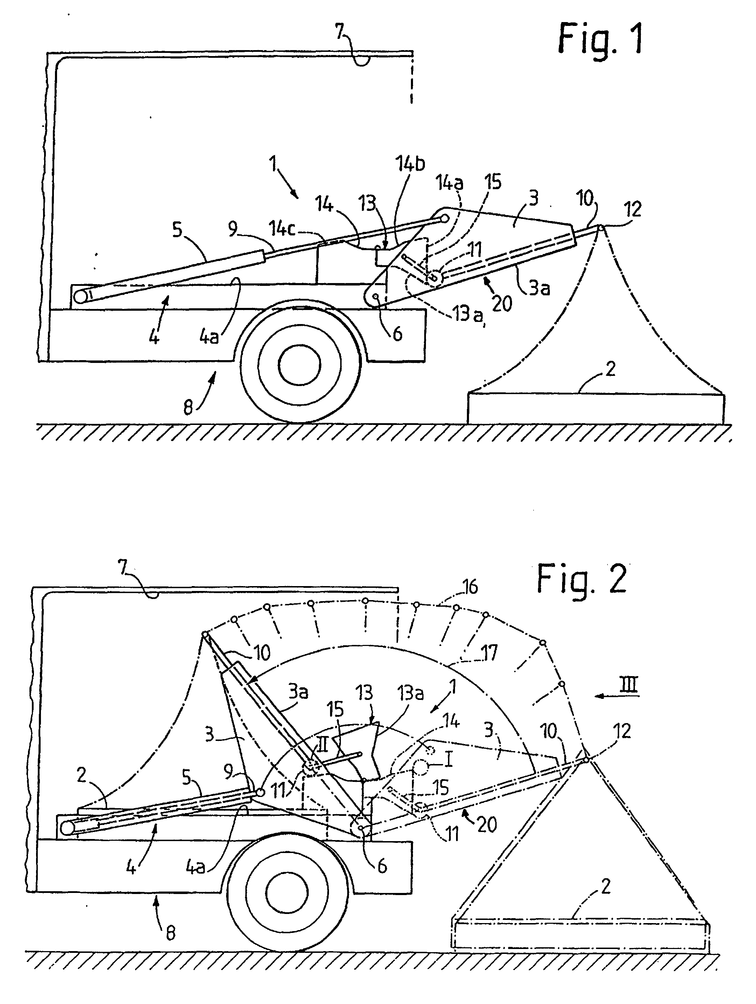

Die in den Figuren 1 bis 3 dargestellte und als ganzes mit 1 bezeichnete Be- und Entladevorrichtung besitzt als wesentliche Elemente Tragmittel 20 bestehend aus zwei einander gegenüberliegenden und zum Tragen einer Palette 2 dienenden Schwenkarmen 3. Diese sind an einem Gestell 4 befestigt, mit je einem Hydraulikzylinder 5 verbunden und um eine gemeinsame Achse 6 drehbar, so wie das bereits bei bekannten Container-Fahrzeugen der Fall ist.

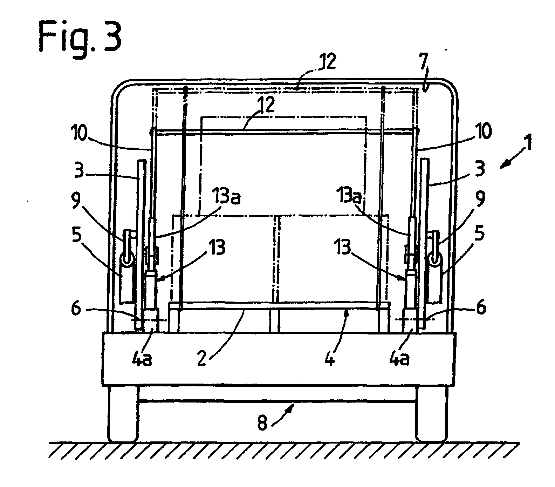

Das Gestell 4 ist im hier vorliegenden Fall in einem Laderaum 7 eines Kleintransporters 8 montiert und weist - wie man insbesondere aus der Figur 3 ersehen kann - zwei zueinander parallel angeordnete Schienen 4a auf, welche zum Tragen je eines Schwenkarmes 3, sowie eines Hydraulikzylinders 5 bestimmt sind. Von diesen Schienen 4a, welche zu den Seitenwänden des Fahrzeuges 8 parallel sind, ist in den Figuren 1 und 2 jeweils nur eine sichtbar.

Schwenkarm 3 und Hydraulikzylinder 5 sind an den beiden Schienen 4a angelenkt. Insbesondere ist der Schwenkarm 3 am einen Ende, nämlich an dem der nicht gezeichneten Hecktüre des Transporters 8 zugewandten Schienenende, und der Hydraulikzylinder 5 am anderen Schienenende drehbar angeordnet.

Jeder Schwenkarm 3 ist also im Gestell 4 ortsfest gelagert und am freien Ende der zum Hydraulikzylinder 5 gehörenden Schubstange 9 angelenkt. Darüber hinaus besitzen die plattenartigen Schwenkarme 3 an ihren einander zugewandten Seiten noch je eine, in einer Schiene oder anderen Führungsmitteln gehaltene und entlang der Längskante 3a verschiebbare Tragstange 10. Jede Tragstange 10 weist hierbei an ihrem entlang der Seitenwände 3a verschiebbaren Ende je ein Laufrad 11 auf, mit welchem sie beim Betrieb der Be- und Entladevorrichtung 1 auf einer nachfolgend noch näher bezeichneten Rollbahn fährt und so das Ein- und Ausschwenken der Palette 2 in bzw. aus dem gedeckten Laderaum 7 ermöglicht. An ihren freien Enden sind die beiden Tragstangen 10 schliesslich noch durch eine horizontale Stange 12 miteinander verbunden, welche ihrerseits mit einer Trageinrichtung zum Tragen der Palette 2 versehen ist.

Die der nicht gezeichneten Hecktüre des Transporters 8 zugewandten Endabschnitte der Schienen 4a sind ferner mit je einem zweiteiligen Aufsatz 13 versehen, der die zur Führung der Laufräder 11 dienende und bereits vorstehend erwähnte Rollbahn 14 ausbildet. Letztere ist dabei derart geformt und ausgebildet, dass die dazugehörige und mit dem Laufrad 11 auf der Rollbahn 14 des Gestelles 4 verfahrbaren Tragstangen 10 in den überdeckten Laderaum 7 des Transportfahrzeuges 8 ein- und aus diesem wieder herausgeschwenkt werden kann. Die Rollbahn 14 zeigt - von aussen nach innen gesehen - als erstes einen ansteigenden Abschnitt 14a, dann im Bereich der Aufnahmeöffnung der Hecktüre ein Kurvental 14b und anschliessend wieder eine Schulter mit einem abfallenden Neigungsstück 14c.

Die Be- und Entladevorrichtung weist ferner Antriebsmittel auf, um die Hydraulikzylinder 5 gemeinsam anzutreiben. Diese nicht gezeichneten Antriebsmittel umfassen insbesondere einen Antriebsmotor und mindestens ein Steuerelement, wie etwa ein Schalthebel oder dergleichen. Letzterer kann beispielsweise in einem von aussen bedienbaren Schaltkasten angeordnet sein und zum Ausführen des nachfolgend näher beschriebenen Be- und Entladevorganges dienen.

Bei einer erfindungsgemässen Be- und Entladevorrichtung der in den Figuren 1 bis 3 dargestellten Art wird die mit Gütern versehene Palette 2 durch Einfahren der synchron antreibbaren Hydraulikzylinder 5 in den Laderaum 7 des Fahrzeuges 8 geladen, und zwar so, dass die Palette 2 unabhängig von der Stellung der Schwenkarme 3 stets ihre horizontale Lage beibehält. Hierbei drehen die Schwenkarme 3 in Pfeilrichtung 17 um die Achse 6 der Figur 2. Demgegenüber bewegt sich die Tragstange 12 entlang der Kurve 16, was insbesondere auf die Führung der verschiebbar gehaltenen und während des Einschwenkens auf der Rollbahn 14 verfahrbaren Tragstangen 10 zurückzuführen ist. Beim Beladen wird also zuerst die Palette 2 angehoben bis die Laufräder 11 der beiden Tragstangen 10 die Position I erreicht haben. Dann wird durch die im Bereich der Aufnahmeöffnung der Hecktüre abfallende Rollbahn 14 ein Ansteigen der Schwenkkurve 16 über das Dach des Laderaumes 7 verhindert und somit ein horizontales Einfahren der Palette 2 in den Laderaum 7 ermöglicht. Sobald die Laufräder 11 der beiden Tragstangen 10 etwa die Position II erreicht haben, wird der wegklappbare Vorderteil 13a des den Vorderteil der Rollbahn 14 bildenden Aufsatzes 13, welcher seinerseits über eine zum Beispiel federgabelartige Verbindung 15 am Laufrad 11 angelenkt ist, hochgeschwenkt, so dass die Hecktüre dann, und zwar nach dem Absetzen der Palette 2 auf die Ladebrücke, geschlossen werden kann.

Zur Entladung des Transportfahrzeuges wird der soeben beschriebene Funktionsverlauf in umgekehrter Reihenfolge ablaufen, wozu die beiden synchron angetriebenen Hydraulikzylinder 5 dann so angetrieben werden, dass die Schubstangen 9 ausfahren und die horizontale Tragstange 12 sich entlang der Kurve 16 zurückbewegt.

An dieser Stelle sei noch darauf hingewiesen, dass die anhand der Figuren 1 bis 3 dargestellte Be- und Entladevorrichtung nur eine Auswahl von mehreren möglichen Ausführungsformen der Erfindung darstellt und in verschiedener Hinsicht geändert werden kann, soweit dies durch die Ansprüche abgedeckt ist.

So kann die erfindungsgemässe Be- und Entladevorrichtung anstelle von Paletten auch Kisten und dergleichen heben und verschwenken und dazu mit entsprechenden Tragmitteln ausgerüstet sein.

## Patentansprüche

1. Für den Einbau auf die Ladebrücke eines Transportfahrzeuges (8) bestimmte Be- und Entladevorrichtung mit zwei Schwenkarmen (3), die um eine gemeinsame Achse (6) drehbar in einem Gestell (4) angeordnet sind, Tragmitteln (20) zum Tragen von zu beladenden oder entladenden Gütern, zwei Hydraulikzylindern (5), welche mit ihren Schubstangen (9) an je einem Schwenkarm (3) angelenkt sind, wobei die genannten Tragmittel (20) mindestens zwei in Längsrichtung verschiebbare Tragstangen (10) umfassen, von denen je eine einem Schwenkarm (3) zugeordnet ist, **dadurch gekennzeichnet, dass** jede Tragstange (10) vom dazugehörigen Schwenkarm (3) verschiebbar gehalten wird und mit ihrem ein Laufrad (11) aufweisenden unteren Ende auf einer Rollbahn (14) verfahrbar ist, und dass diese Rollbahn (14) derart geformt und ausgebildet ist, dass beim Be-und Entladen des Fahrzeuges (8), die die Güter tragenden Tragmittel (20) zuerst angehoben, dann im wesentlichen nahezu horizontal in den Laderaum (7) hinein- oder aus diesem wieder hinausgefahren und anschliessend wieder abgesenkt werden.

2. Be- und Entladevorrichtung nach Anspruch 1, **dadurch gekennzeichnet, dass** das Gestell (4) zwei zueinander parallel angeordnete Schienen (4a) besitzt und dass je ein Schwenkarm (3) und ein Hydraulikzylinder (5) an einer solchen Schiene (4a) angelenkt sind.

3. Be- und Entladevorrichtung nach Anspruch 2, **dadurch gekennzeichnet, dass** der Schwenkarm (3) am einen Ende, nämlich an dem der Hecktüre des Transportfahrzeuges (8) zugewandten Schienenende, und der Hydraulikzylinder (5) am anderen Schienenende drehbar angeordnet ist.

## Revendications

1. Dispositif de chargement et de déchargement destiné au montage sur le pont de chargement d'un véhicule de transport (8), avec deux bras pivotants (3), disposés dans un châssis (4) afin de tourner autour d'un axe commun (6), des supports (20) pour porter les biens à charger ou décharger, deux vérins hydrauliques (5), qui sont articulés avec leurs tiges (9) chacun à un bras pivotants (3), les supports (20) cités saisissant au moins deux barres porteuses (10) mobiles en sens longitudinal, étant chacune attribuée à un bras pivotants (3), **caractérisé par le fait que** chaque barre porteuse (10) est tenue mobile par le bras pivotant (3) correspondant et pouvant rouler avec leur extrémité inférieure présentant une roue (11) sur une surface de roulement (14), et que cette surface de roulement (14) présente une forme telle que lors du chargement et du déchargement du véhicule (8), les supports (20) portant les biens sont d'abord soulevés, puis déplacés pour l'essentiel presque horizontalement vers l'espace de chargement (7) ou en soient éloignés et ensuite de nouveau abaissés.

2. Dispositif de chargement et de déchargement selon la demande 1, **caractérisé par le fait que** le châssis (4) possède deux rails (4a) disposés parallèlement entre eux et qu'un bras pivotant (3) et un vérin hydraulique (5) soient articulés chacun à un tel rail (4a).

3. Dispositif de chargement et de déchargement selon la demande 2, **caractérisé par le fait que** le bras pivotant (3) soit disposé à une extrémité, soit à l'extrémité du rail dirigée vers la porte arrière du véhicule de transport (8), et le vérin hydraulique (5) à l'autre extrémité du rail.

## Claims

1. Loading and unloading apparatus intended for installation on the loading bridge of a transport vehicle (8) and comprising two pivot arms (3) which are arranged in a frame (4) so as to be rotatable about a common axis (6), carrying means (20) for carrying goods to be loaded or unloaded, two hydraulic cylinders (5) which are each hinged with their thrust rods (9) to a pivot arm (3), said carrying means (20) comprising at least two carrying rods (10) which are displaceable in the longitudinal direction and each of which is coordinated with a pivot arm (3), **characterized in that** each carrying rod (10) is displaceably held by the associated pivot arm (3) and is capable of travelling on a runway (14) by means of its lower end having a running wheel (11), and that this runway (14) is shaped and formed in such a way that, during loading and unloading of the vehicle (8), the carrying means (20) carrying the goods are first raised, then substantially moved virtually horizontally into the loading space (7) or out of said space again and then lowered again.

2. Loading and unloading apparatus according to Claim 1, **characterized in that** the frame (4) has two rails (4a) arranged parallel to one another and that a pivot arm (3) and a hydraulic cylinder (5) are hinged to each of such rails (4a).

3. Loading and unloading apparatus according to Claim 2, **characterized in that** the pivot arm (3) is rotatably arranged at one end, namely at the rail end facing the rear door of the transport vehicle (8), and the hydraulic cylinder (5) is rotatably arranged at the other end of the rail.
